# EUROPEAN PATENT APPLICATION

(11) **EP 4 752 535 A1**
(43) Date of publication of application: **03.06.2026**
(21) Application number: 24846072.7
(22) Date of filing: 25.07.2024
(51) Int. Cl.: G01N 21/84, H04N 23/67, G01N 21/17

(54) **SLIDE SCAN DEVICE AND OPERATING METHOD THEREFOR**

(30) Priority: 25.07.2023 KR 20230096775; 26.12.2023 KR 20230191317; 28.12.2023 KR 20230194391
(71) Applicant: CURIOSIS INC., Seoul 06221 (KR)
(72) Inventor: PARK, Minseop, Seoul 06221 (KR); BAIK, Dongyoub, Seoul 06221 (KR); SHIN, Jae Hoon, Seoul 06221 (KR); LEE, Beom Jun, Seoul 06221 (KR); IM, Yunyeong, Seoul 06221 (KR)
(74) Representative: Viering, Jentschura & Partner mbB Patent- und Rechtsanwälte
(86) International application number: PCT/KR2024/010873
(87) International publication number: WO 2025/023771

(57) **Abstract**

An embodiment of the present disclosure aims to provide a slide scan device. In an embodiment, the slide scan device may comprise: a slide tray slot for accommodating one or more slide trays; a fork for transporting a slide tray; a preview camera for acquiring a preview image for the slide tray; and an optical device for acquiring a scan image for one or more slides arranged on the slide tray.

## Description

### Technical Field

The present disclosure relates to a slide scan device and an operating method thereof.

### Background Art

The pathology department plays a role in providing a cornerstone for the treatment direction of clinicians by observing and analyzing morphological changes in a patient's cells, tissues, tissue fluids, etc., to make a diagnosis. In the pathology department, conventional cytology or tissue biopsy was typically conducted by a specialist who visually inspects and diagnoses a patient's cell slides or tissue slides using a microscope. However, recently, as digital slide scanners have been introduced into pathological diagnosis, pathological diagnosis using digital images scanned from cell-stained slides or tissue-stained slides is being performed in addition to pathological diagnosis using a microscope.

A slide equipped with a patient's specimen is accommodated in a tray, the slide tray is accommodated in a slide tray slot, the slide tray accommodated in the slide tray slot is scanned by a digital slide scanner or the like, and as the scan is performed, information on the slides accommodated in the slide tray can be acquired to perform pathological diagnosis.

Much research is being conducted on the automation of slide scan devices to acquire information on more slides in a short time.

### Detailed Description of the Invention

### Technical Problem

The present disclosure aims to provide an automated slide scan device.

### Solution to Problem

An embodiment of the present disclosure aims to provide an automated slide scan device and a slide scanning method using the same.

A slide scan device according to an embodiment of the present disclosure may comprise:
a slide tray slot for accommodating one or more slide trays;
a fork for transporting a slide tray;
a preview camera for acquiring a preview image for the slide tray; and
an optical device for acquiring a scan image for one or more slides arranged on the slide tray.

In an embodiment, the fork may be configured to:
extract a slide tray accommodated in the slide tray slot and transport it to at least one of a preview image acquisition position and a scan image acquisition position.

In an embodiment, the scan image for the one or more slides may be:
acquired after acquiring the preview image.

In an embodiment, the slide scan device may further comprise:
a shuttle disposed at a position corresponding to the optical device,
wherein the shuttle may be configured to:
   move in an xy-plane to acquire the scan image for the one or more slides.

In an embodiment, the optical device may comprise:
a scan camera, a barrel, a z-axis transport unit, and an objective lens,
wherein the objective lens may be configured to:
   move along a z-axis according to an autofocus algorithm by the z-axis transport unit.

In an embodiment, the slide scan device may comprise:
a display;
a memory storing one or more instructions; and
at least one processor executing the one or more instructions stored in the memory,
wherein the at least one processor, by executing the one or more instructions, may:
   control the display to output an image for at least one of the preview image and the scan image of the one or more slides.

In an embodiment, the display may be:
provided on a door of the slide scan device.

In an embodiment, the door may be:
installed to be slidable.

An embodiment of the present disclosure provides a slide scanning method of the slide scan device, the method comprising:
receiving a scan request for a first slide tray;
transporting, by the fork, the first slide tray accommodated in the slide tray slot to a preview image acquisition position;
acquiring, by the preview camera, a preview image of the first slide tray;
transporting, by the fork, the first slide tray to a scan image acquisition available position; and
acquiring, by the optical device, a scan image for one or more slides arranged on the first slide tray.

In an embodiment, the step of transporting, by the fork, the first slide tray to the scan image acquisition position may comprise:
transporting, by the fork, the first slide tray to a shuttle.

In an embodiment, the step of acquiring, by the optical device, the scan image for the one or more slides arranged on the first slide tray may comprise:
(a) extracting a region of interest (ROI) of a first slide;
(b) performing Image Autofocusing (IAF) at a first point of the ROI to determine a Reference Focus Position (RFP);
(c) performing Laser Autofocusing (LAF) at a second point of the ROI based on the determined RFP; and
(d) acquiring a scan image for the ROI of the first slide by repeating step (c) for the entire ROI of the first slide.

In an embodiment, the first point may be a point determined as a point where a sample exists in the ROI.

In an embodiment, the first point may be determined by the autofocus performing device as a centroid point of the sample or a center point of the ROI.

In an embodiment, the scan image acquisition step may further comprise: identifying a centroid of the sample; determining whether a sample exists at the centroid; and if it is determined that no sample exists at the centroid, determining a point where a sample exists closest to the centroid as the first point.

In an embodiment, the scan image acquisition step may further comprise: identifying coordinates of a center point of the ROI; determining whether a sample exists at the center point of the ROI; and if it is determined that no sample exists at the center point of the ROI, determining a point where a sample exists closest to the center point of the ROI as the first point.

In an embodiment, the RFP may be determined based on a peak level of a laser reflected from an upper surface of a cover glass, a lower surface of the cover glass, an upper surface of a slide glass, or a lower surface of the slide glass.

An embodiment of the present disclosure comprises a program stored on a recording medium to execute the method according to an embodiment of the present disclosure on a computer.

An embodiment of the present disclosure comprises a computer-readable recording medium storing a program for executing the method according to an embodiment of the present disclosure on a computer.

An embodiment of the present disclosure comprises a computer-readable recording medium storing a database used in an embodiment of the present disclosure.

### Advantageous Effects of Invention

According to an embodiment of the present disclosure, scan information of a large number of slides can be acquired quickly and easily.

### Brief Description of Drawings

FIG. 1 is an example drawing of a slide scan device according to an embodiment of the present disclosure.
FIG. 2 illustrates an internal configuration of a slide scan device according to an embodiment of the present disclosure.
FIG. 3 is an example drawing of a slide scan device acquiring a preview image according to an embodiment of the present disclosure.
FIG. 4 illustrates a method of extracting or inserting a slide tray from a slide tray slot according to an embodiment of the present disclosure.
FIG. 5 illustrates a state where a slide tray is transported to a shuttle according to an embodiment of the present disclosure.
FIG. 6 illustrates a method of acquiring a scan image according to an embodiment of the present disclosure.
FIG. 7a is a drawing for explaining a method of determining a Reference Focus Position (RFP) according to an embodiment of the present disclosure.
FIG. 7b is an example graph of peak information according to an embodiment of the present disclosure.
FIG. 8 illustrates a camera module performing an autofocus procedure according to an embodiment of the present disclosure.
FIG. 9 is a flowchart of a method by which a slide scan device scans a slide according to an embodiment of the present disclosure.
FIG. 10 is a block diagram of a slide scan device according to an embodiment of the present disclosure.
FIG. 11 is an example drawing of a slide scan device according to an embodiment of the present disclosure.
FIG. 12 illustrates a slide tray according to an embodiment of the present disclosure.
FIG. 13 illustrates a slide according to an embodiment of the present disclosure.
FIG. 14 illustrates a slide scan device according to an embodiment of the present disclosure.
FIG. 15 illustrates a method of extracting a Region Of Interest (ROI) according to an embodiment of the present disclosure.
FIG. 16 is a flowchart illustrating a method of scanning an ROI according to an embodiment of the present disclosure.
FIG. 17a illustrates a method of determining a first point for performing passive autofocus according to an embodiment of the present disclosure.
FIG. 17b illustrates a method of determining a first point for performing passive autofocus according to an embodiment of the present disclosure.

### Embodiments of the Invention

In order to clarify the technical spirit of the present disclosure, an embodiment of the present disclosure will be described in detail with reference to the accompanying drawings. In the description of the present disclosure, certain detailed explanations of the related art or components are omitted when it is deemed that they may unnecessarily obscure the essence of the present disclosure. Components having substantially the same functional configuration in the drawings are labeled with the same reference numerals and symbols as much as possible even though they are shown in different drawings. For convenience of description, a device and method will be described together when necessary. Each operation of the present disclosure need not necessarily be performed in the order described, and may be performed in parallel, selectively, or individually.

The terms used in the embodiments of the present disclosure have been selected from general terms that are currently widely used in consideration of the functions in the present disclosure, but they may vary according on the intention or precedent of those skilled in the art, the emergence of new technology, etc. In addition, in specific cases, there are terms arbitrarily selected by the applicant, and in this case, the meaning thereof will be described in detail in the description part of the corresponding embodiment. Therefore, the terms used herein should be defined based on the meaning of the terms and the overall content of the present disclosure, rather than simply the name of the term.

Throughout the present disclosure, singular expressions may include plural expressions unless the context clearly dictates otherwise. Terms such as "comprise" or "include" are intended to designate the presence of features, numbers, steps, operations, components, parts, or combinations thereof, and should be understood as not precluding the possibility of the presence or addition of one or more other features, numbers, steps, operations, components, parts, or combinations thereof. That is, when a part "includes" a certain component throughout the present disclosure, it means that it may further include other components, not excluding other components, unless specifically stated to the contrary.

Expressions such as "at least one of" modify the entire list of components and do not modify the individual components of the list. For example, "at least one of A, B, and C" and "at least one of A, B, or C" refer to only A, only B, only C, both A and B, both B and C, both A and C, all of A, B, and C, or combinations thereof.

In addition, terms such as "... unit", "... module" described in the present disclosure refer to a unit that processes at least one function or operation, and this may be implemented as hardware or software, or a combination of hardware and software.

Throughout the present disclosure, when a part is referred to as being "connected" to another part, this includes not only cases where it is "directly connected" but also cases where it is "electrically connected" with another element interposed therebetween. In addition, when a part "includes" a certain component, it means that it may further include other components, not excluding other components, unless specifically stated to the contrary.

The expression "configured to (or set to)" used throughout the present disclosure may be used interchangeably with, for example, "suitable for", "having the capacity to", "designed to", "adapted to", "made to", or "capable of", depending on the situation. The term "configured to (or set to)" may not necessarily mean only "specifically designed to" in hardware. Instead, in some situations, the expression "system configured to" may mean that the system "can do" something together with other devices or components. For example, the phrase "a processor configured (or set) to perform A, B, and C" may mean a dedicated processor (e.g., an embedded processor) for performing the corresponding operation, or a generic-purpose processor (e.g., a CPU or application processor) capable of performing the corresponding operations by executing one or more software programs stored in memory.

Terms including ordinals such as first, second, etc. may be used to describe various components, but the components are not limited by the terms. The terms are used only for the purpose of distinguishing one component from another. For example, a first component may be named a second component, and similarly, a second component may also be named a first component, without departing from the scope of the present disclosure. The term "and/or" includes combinations of a plurality of related items or any one item among the plurality of related items.

Throughout the present disclosure, a slide refers to a thin and flat piece of glass used to fix a specimen, and may include a slide glass, a glass slide, a specimen slide, a microscope slide, a slide glass with a specimen placed on it and covered with a cover glass, etc. But, it is of course not limited to the above examples.

Throughout the present disclosure, a slide tray is a case for transporting or storing slides, and may also be referred to as a tray, glass plate, slide plate, slide holder, glass holder, slide case, glass case, slide folder, glass folder, etc.

The term "sample" as used herein is used interchangeably with "specimen" and may include anything known in the art to be observable with an optical or light microscope. For example, "sample" may include cells or tissues (e.g., cells or tissues of animals, plants, fungi, protists, bacteria, etc. - including both normal and pathological cells/tissues), cell components (e.g., nucleus, cytoplasm, chloroplasts, mitochondria, etc.), microorganisms (e.g., bacteria, protozoa, some algae and fungi, etc.), organoids, etc., but is not limited thereto.

The term "about" as used herein means within 10%, preferably within 5%, more preferably within 1% of a given numerical value or range.

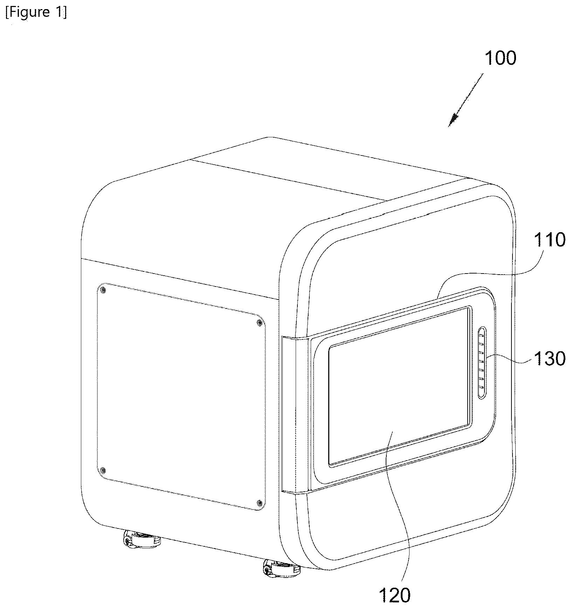

FIG. 1 is an example drawing of a slide scan device according to an embodiment of the present disclosure.

Referring to FIG. 1, the slide scan device (100) may include a door (110). In an embodiment, the door (110) may include a display (120) and a handle (130). For example, the display (120) may include a touch monitor or a touch screen. In addition, the display (120) may be fixed to a bracket, and the bracket may serve as a door. In an embodiment, the door (110) may be installed to be slidable.

In an embodiment, the information displayed on the display (120) may be designed to vary depending on whether the door (110) is in a fully open state, an open state, or a closed state. That is, the slide scan device (100) may identify at least one of a closed state, an open state, and a fully open state of the door (110), and based on the state of the door, control the display (120) to output a User Interface (UI) corresponding to the state of the door. For example, if the door (110) is in an open state or a fully open state, the slide trays may be exposed to the outside or their safety may not be guaranteed due to the movement of equipment, so the scanning operation of the slide scan device may be controlled to be impossible. Accordingly, if the door (110) is in an open state or a fully open state, an indication that the slide scanning process is impossible due to the open state of the door may be output on the display (120).

According to an embodiment, unlike conventional equipment that required a large installation space for the equipment by providing scan information of slides on a separate monitor, a slide scan device can be provided that enables to be miniaturized by having a monitor integrated into the form of a door.

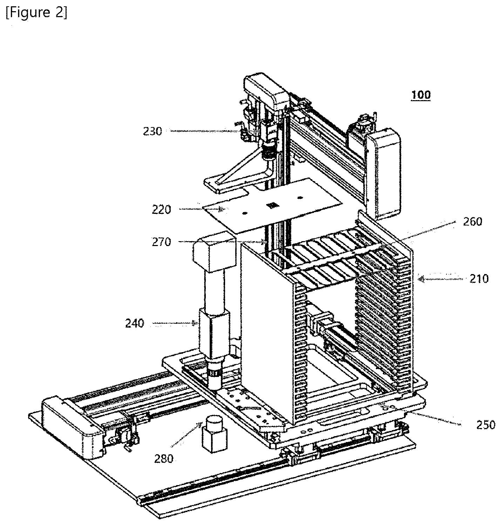

FIG. 2 illustrates an internal configuration of a slide scan device according to an embodiment of the present disclosure.

Referring to FIG. 2, the slide scan device (100) internally includes a slide tray slot (210) accommodating one or more slide trays (260), a fork (220) for transporting the slide tray, a fork support (270) to which the fork is slidably connected so that the fork (220) can move up and down, a preview camera (230) for acquiring a preview image for the slide tray, an optical device (240) for acquiring a scan image for one or more slides arranged on the slide tray, a shuttle (250) disposed at a position corresponding to the optical device for acquiring the scan image and moving in the xy plane according to a predetermined algorithm during slide scanning, an illumination unit (280), etc. However, not all components shown in FIG. 2 are essential components of the slide scan device (100). The slide scan device (100) may be implemented with more components than those shown in FIG. 2, or may be implemented with fewer components than those shown in FIG. 2.

In an embodiment, the slide tray slot (210) is a device for storing slide trays, and may be referred to as a cabinet for storing slide trays, a slide tray cabinet, a slide tray storage cabinet, a slide tray rack, etc. The slide tray slot (210) may include a plurality of slide tray receiving portions arranged in a vertical stack.

In an embodiment, the fork (220) may take out the slide tray (260) accommodated in the slide tray slot (210) and transport it to a position where a preview image can be acquired. In addition, when the preview image is acquired, the fork (220) may again accommodate the slide tray (260) in the slide tray receiving portion of the slide tray slot (210).

In an embodiment, the fork (220) may take out the slide tray (260) accommodated in the slide tray slot (210) and transport it to a position where a scan image of the slides can be acquired. In addition, when the scan image is acquired, the fork (220) may again accommodate the slide tray (260) in the slide tray receiving portion of the slide tray slot (210).

In an embodiment, the slide scan device (100) acquires a preview image for the slide tray (260), recognizes information about the slide tray, slide, or pathological sample from the preview image, acquires a slide scan image based on this, and stores the slide scan image in association with the information about the slide tray, slide, or pathological sample. That is, the scan images of the slides may be acquired after the preview image is acquired. That is, the slide scan device (100) may acquire a preview image by photographing the slide tray (260) transported by the fork (220) to a position where a preview image can be acquired using the preview camera (230), and then acquire the scan image after the fork(220) transports the slide tray (260) to a position where a scan image can be acquired .

In an embodiment, while the slide tray (260) is placed on the fork (220), a preview image for a plurality of slides may be acquired using the preview camera (230), and a scan image for the pathological sample accommodated in each slide may be acquired using the optical device (240).

In an embodiment, the fork (220) may transport the slide tray (260) to a position where a preview image can be acquired by the preview camera (230), and after acquiring the preview image, the fork (220) may transport the slide tray (260) again to a position where an image of the pathological sample can be acquired using the optical device (240). In another embodiment, a first fork may transport the slide tray (260) to a position where a preview image can be acquired by the preview camera (230), and after acquiring the preview image, a second fork (separate from the first fork) may transport the slide tray (260) to a position where an image of the pathological sample can be acquired using the optical device (240).

In an embodiment, the preview camera (230) may acquire a preview image for a plurality of slides placed on the fork (220). For example, the preview camera (230) may acquire the entire image of the slide tray (260) as a preview image. As another example, the preview camera (230) may acquire an image of some of the slides mounted on the slide tray (260) as a preview image.

In an embodiment, the fork (220) may be stopped at a location spaced apart from the preview camera (230) by a predetermined distance so that the preview camera (230) can acquire a preview image for a plurality of slides. That is, for example, the fork (220) may move the slide tray (260) to a predetermined position where the preview camera (230) can acquire the entire image of the slide tray (260). In an embodiment, the preview camera (230) may have a resolution suitable for obtaining the information desired to be derived from the preview image. For example, the preview camera (230) may be configured as a camera with a lower resolution than the optical device (240).

In an embodiment, the preview camera (230) may include one or more lens(es), an image sensor, and a focus control unit. The preview camera (230) may adjust the focus on the slide tray using the focus control unit, and acquire an image passed through the one or more lens(es) with the image sensor.

In an embodiment, the fork (220) may move the slide tray (260) to a predetermined position so that the optical device (240) can scan an area of the slide. For example, the fork (220) may transport the slide tray (260) onto the shuttle (250).

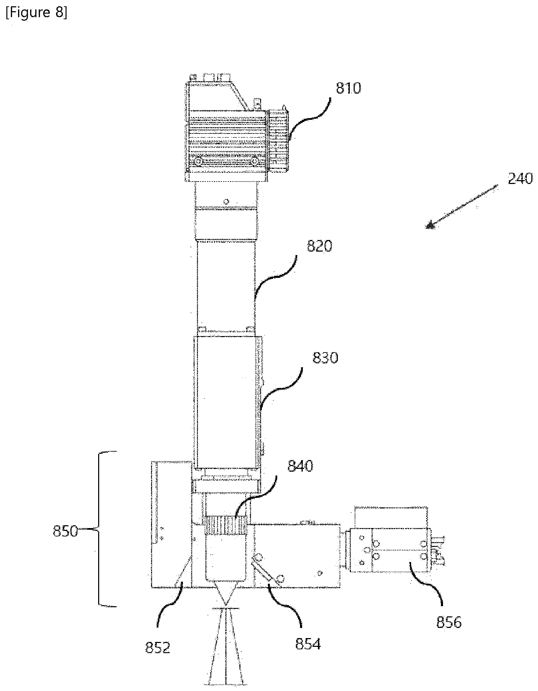

In an embodiment, the optical device (240) may acquire a scan image for the pathological sample included in each slide. The specific configuration of the optical device (240) will be described in more detail later with reference to FIG. 8. In an embodiment, the optical device (240) may divide one slide into a plurality of regions, acquire scan images for each region, and then combine them to acquire an image for the entire slide. For example, the optical device (240) may divide the area of the slide into the form of rectangular tiles and acquire a scan image for each area. As another example, the optical device (240) may divide the slide area into a plurality of lines, acquire scan images in a line scan manner, and then combine them. As another example, the optical device (240) may acquire an image of the entire slide at once. However, the method by which the optical device (240) acquires the image of the slide is not limited thereto, and two or more of the methods exemplified above may be used in combination.

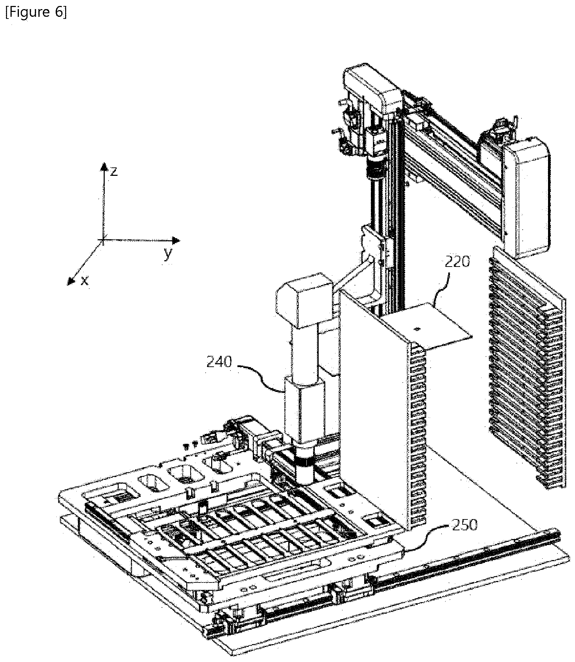

In an embodiment, the optical device (240) may include one or more lens(es), an image sensor, and a focus control unit. The optical device (240) may adjust the focus for each area of the slide to be scanned using the focus control unit, and acquire the image passed through the one or more lens(es) with the image sensor. The method by which the optical device (240) acquires a scan image will be described in more detail later with reference to FIGS. 6 to 8.

In an embodiment, the fork (220) may mount the slide tray (260) on its upper surface. The fork (220) may include fixing means (not shown) capable of fixing the slide tray (260) to its upper surface. For example, the fork (220) may include means for fixing the whole or part of the slide tray (260) in a vertical direction or a horizontal direction.

In an embodiment, the shuttle (250) may move so that the optical device (240) can scan the next area after completing a scan of one area of the slide. For example, the shuttle (250) may move according to the scanning direction when the optical device (240) performs Laser AutoFocus (LAF). As another example, if the optical device (240) uses a line scan method, the shuttle (250) can be moved together with the slide tray (260) for line scanning. For example, the shuttle (250) on which the slide tray (260) is placed can be moved in accordance with the line scan speed of the optical device (240).

In another embodiment, the fork (220) or the shuttle (250) does not move, but the preview camera (230) or the optical device (240) moves to a predetermined position to acquire a preview image or a slide image. For example, after the position of the fork (220) or the shuttle (250) is fixed at a predetermined location, the preview camera (230) or the optical device (240) may be mounted on a movable arm and moved to a position for acquiring a preview image or a slide scan image.

In an embodiment, the slide scan device (100) may include an illumination unit (280) for providing illumination to the slide tray (260) and/or the slide. The illumination unit (280) may provide illumination from above or below the slide tray (260). In another embodiment, the illumination unit may provide illumination to both the top and bottom surfaces of the slide tray (260).

In an embodiment, the acquired preview image or scan image may be output to the display (120) of FIG. 1.

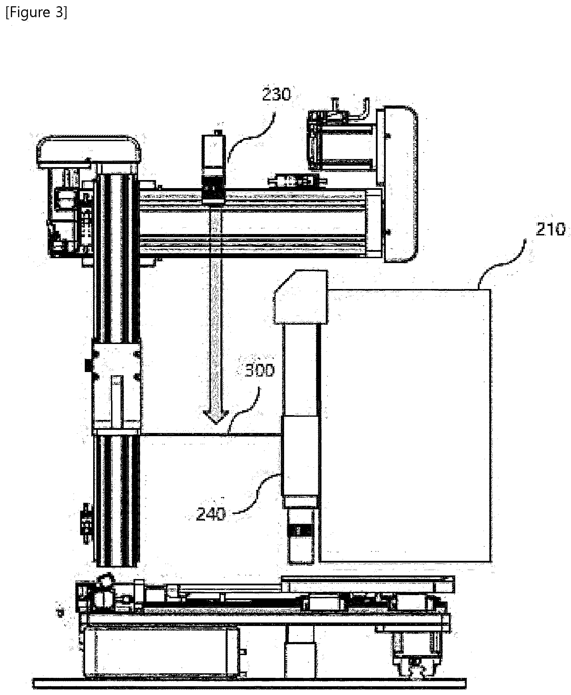

FIG. 3 is an example drawing of a slide scan device acquiring a preview image according to an embodiment of the present disclosure.

Referring to FIG. 3, when the slide tray is located at the preview image acquisition position (300), the preview camera (230) may acquire a preview image of the slide tray.

In an embodiment, when the slide scan device (100) receives a scan request for a first slide tray, it may transport the first slide tray accommodated in the slide tray slot (210) to the preview image acquisition position (300) using the fork (220), and acquire a preview image for the transported first slide tray using the preview camera (230). In addition, when the acquisition of the preview image is completed, the slide scan device (100) may control the fork (220) to accommodate the first slide tray back into the slide tray slot (210), or control the fork (220) to transport it to the scan image acquisition position to acquire the scan image immediately.

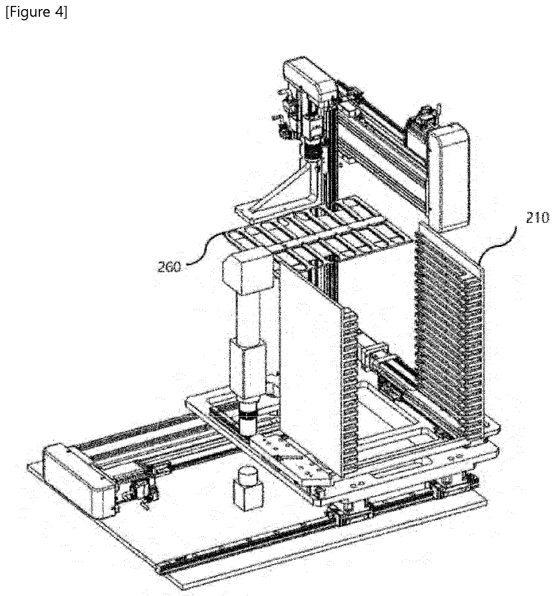

FIG. 4 illustrates a method of extracting or inserting a slide tray from a slide tray slot according to an embodiment of the present disclosure.

Referring to FIG. 4, a method of extracting or inserting a slide tray (260) from the slide tray receiving portion of the slide tray slot (210) is illustrated. In an embodiment, when the slide scan device (100) intends to acquire a preview image, acquire a scan image, or extract a slide tray from the slide tray slot for other reasons, it may extract the slide tray (260) from the slide tray slot (210) using the fork (220).

In an embodiment, the slide tray slot (210) may include a plurality of slide tray receiving portions. For example, the slide tray slot (210) may include 20 slide tray receiving portions capable of accommodating slide trays. When the slide scan device (100) receives an extraction request for a first slide tray (e.g., a request for acquiring a preview image), it identifies which slide tray receiving portion the first slide tray is accommodated in, and extracts the slide tray accommodated in the corresponding slide tray receiving portion using the fork (220).

Similarly, when the slide scan device (100) receives a storage request for a first slide tray (e.g., a scan completion signal), it identifies the slide tray receiving portion where the first slide tray is to be stored, and controls the fork (220) to insert the first slide tray into the corresponding slide tray receiving portion.

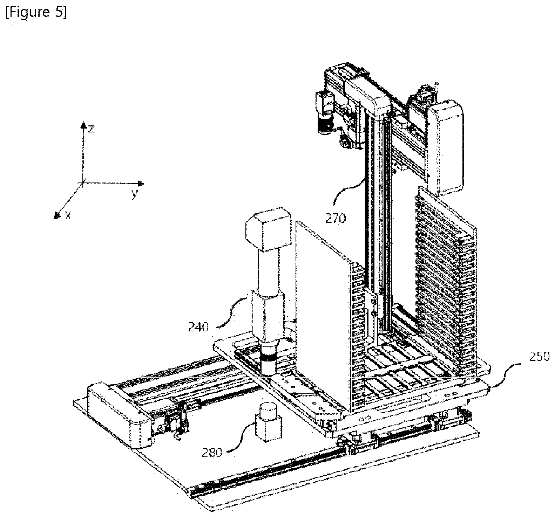

FIG. 5 illustrates a state where a slide tray is transported to a shuttle according to an embodiment of the present disclosure.

Referring to FIG. 5, the slide scan device (100) may place the slide tray on the shuttle (250) using the fork (220) to acquire a scan image of the slide tray. In an embodiment, the fork (220) may move along the z-axis by the fork support (270) to transport the slide tray. Therefore, when the slide scan device (100) receives a request to acquire scan images of the slides, it can place the slide tray on the shuttle (250) using the fork (220). For example, the lowest point to which the fork (220) can move may be the height where the shuttle exists. After the slide tray is placed on the shuttle (250), the slide must be moved to a position corresponding to the optical device (240) and the illumination unit (280) to acquire scan images of the slides. Therefore, after the slide tray is placed on the shuttle (250), the shuttle (250), not the fork (220), can move on the xy plane. In this regard, more detailed description will be given later with reference to FIG. 6.

FIG. 6 illustrates a method of acquiring a scan image according to an embodiment of the present disclosure.

Referring to FIG. 6, after the slide tray is fixed to the shuttle (250) by the fork (220), the slide scan device (100) can acquire a scan image of the slide tray by controlling the shuttle (250) to move in the xy plane. In an embodiment, the scan image may be acquired after an autofocusing process.

Autofocus methods for automatically focusing an image can be broadly divided into active systems and passive systems. The active method is a method in which the camera uses an external measuring device to measure the distance to the object and focuses based on this information. This method determines the focus through direct distance measurement, and typically uses laser, infrared, or ultrasonic sensors. The camera measures the exact distance to the object using a physical measuring device and adjusts the focus of the lens based on this information. Representative examples include infrared (IR)-based systems and Laser AutoFocus (LAF). This method has a relatively very fast response characteristic, but has the disadvantage of relatively low precision. In particular, in the case of a sample consisting of a transparent layer with a thin thickness, the accuracy may degrade due to ambiguity in the focal position when using an objective lens of a certain magnification. This is because light reflected from both the upper and lower surfaces of the transparent object enters the light receiver together, and the focal points are formed at a similar position by the condensing lens.

In contrast, the passive method is a method in which the camera automatically focuses by analyzing the image data itself without using an external measuring device (such as a laser, ultrasonic sensor, etc.). This method involves moving the objective lens a certain distance from its current position, which is separated from the sample by an arbitrary distance, while simultaneously obtaining images of the sample using an image sensor. The image sharpness is calculated from these multiple images to determine the image sharpness according to each movement position. The position that yields the highest image sharpness is identified as the focal position of the sample. By moving the lens from the current position to the position with the highest image sharpness, the object of observation comes into focus. This method can find the focal position precisely, but it requires capturing and analyzing multiple images to determine the focal position while moving a predetermined distance, making the focusing process relatively slow. A representative example of this passive method is the Image AutoFocus (IAF) method.

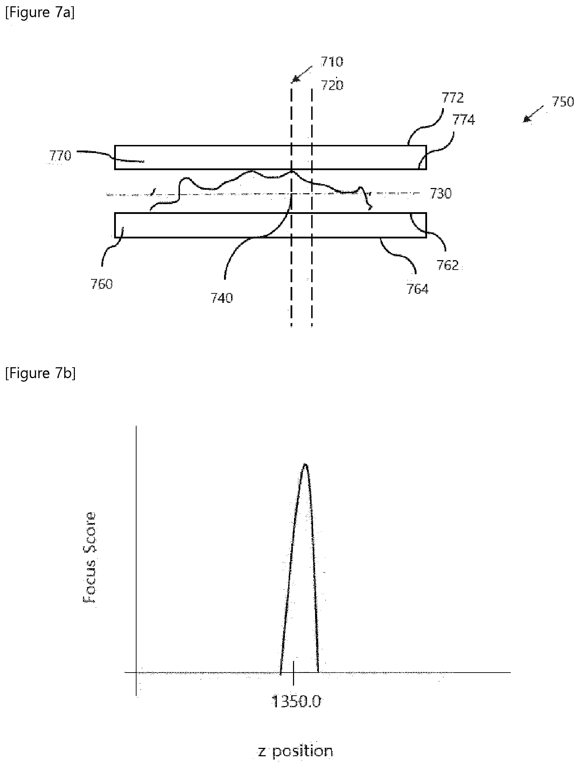

Generally, the LAF method can search for the Reference Focus Position (RFP) at high speed, but due to the influence of the thickness or flatness of the sample, the initially detected RFP may not be the optimal focal position. Accordingly, the slide scan device (100) according to an embodiment of the present disclosure may adopt a method of determining the RFP through IAF and then performing LAF based on it. Further details regarding this will be described later with reference to FIGS. 7a and 7b.

According to an embodiment, the optimal focal distance may be searched for before scanning the Region of Interest (ROI), considering the flatness of the mechanism (e.g., transport system, tray, etc.), vibration of the mechanism, thickness variation of the sample within the slide, etc. This enables a more precise and high-speed scanning process to be performed.

FIG. 7a is a drawing for explaining a method of determining a Reference Focus Position (RFP) according to an embodiment of the present disclosure, and FIG. 7b is an example graph of peak information according to an embodiment of the present disclosure.

Referring to FIG. 7a, the slide (750) may include a slide glass (760), which is a transparent bottom plate with an approximate thickness of 1T = 1mm, a sample placed on the slide glass (760), and a cover glass (770) with a thickness of about 0.1T to 0.2T covering the sample. In an embodiment, the slide scan device (100) may determine the reference focus position (RFP) for performing LAF using IAF before scanning the Region of Interest (ROI) of the slide. For example, by performing IAF, the z-axis position of the objective lens where the sharpest image is acquired may be identified and determined as the RFP. At this time, since the objective lens moves together with the LAF module by one motor (i.e., transported together as a Focus transport set; this will be explained in detail in FIG. 8), the RFP can be searched for by measuring the peak level of the laser by performing LAF at the point where a sharp image is acquired through IAF. For example, the slide scan device (100) may search for the RFP by measuring the peak level of the laser reflected from the upper surface (772) of the cover glass (770), the lower surface (774) of the cover glass (770), the upper surface (762) of the slide glass (760), and the lower surface (764) of the slide glass (760) and checking the z value of the LAF module at that time. In an embodiment, the slide scan device (100) may search for the RFP by measuring the peak level of the laser reflected from the central boundary where the sample is located, such as the lower surface (774) of the cover glass (770) or the upper surface (762) of the slide glass (760). For example, the slide scan device (100) may measure the peak level of the laser reflected from the lower surface (774) of the cover glass (770) and determine the z value at this time as the RFP.

In a more specific embodiment, the slide scan device (100) may determine the RFP by performing IAF at a first point (710). For example, the slide scan device (100) may acquire multiple images while adjusting the height of the objective lens at the first point (710) and then determine the focal position for acquiring the sharpest image. For example, the slide scan device (100) may determine the first focus (740) as the focus for acquiring the sharpest image at the first point (710), and determine the position of the objective lens or the LAF module (hereinafter collectively referred to as the "focus transport set") at this time as the reference focus position (RFP). In an embodiment, the reference focus position (RFP) may be the distance between the focus transport set for acquiring the first focus (740) and the sample, or alternatively, the distance between the focus transport set and the upper surface of the cover glass, the distance between the focus transport set and the lower surface of the cover glass, the distance between the focus transport set and the upper surface of the slide glass, or the distance between the focus transport set and the lower surface of the slide glass. In an embodiment, the reference focus position (RFP) may be the distance between the focus transport set and the upper surface of the cover glass or the distance between the focus transport set and the lower surface of the slide glass.

In an embodiment, the slide scan device (100) may acquire the sharpest image for the first point (710) at the first focus (740) (i.e., the image obtained by performing IAF), and determine the z-position corresponding to the laser peak obtained via the laser emitting unit and the light receiving unit at the first focus (740) as the RFP. For example, according to FIG. 7b, if the z-position corresponding to the laser peak of LAF for the first point obtained in the above example is 1350, this is determined as the RFP.

In an embodiment, once the RFP is determined at the first point (710), the slide scan device (100), more specifically, the optical device (240), may move to a second point (720) to acquire images in other regions of the ROI, and perform LAF based on the RFP. In an embodiment, the optical device (240) may move along a reference focal plane (730) predetermined under the assumption that the RFP determined according to the first focus (740) is the optimal focal position for the entire ROI area. The optical device (240) moves to the second point (720) along the reference focal plane (730) and then performs LAF, thereby adjusting the z position of the focus transport set to match the RFP, and then acquires the image. By performing LAF in this manner across all areas of the ROI, a high-quality scan image for the ROI can be acquired.

In another embodiment, the optical device (240) may be fixed, only the objective lens may move along the z-axis, and the slide tray may be moved by the shuttle (250), so that the optical device (240) performs LAF at the second point for scanning. Similarly, the movement of the slide tray can proceed along the reference focal plane (730).

In the embodiment according to FIG. 7b, when the RFP is determined as the z-position 1350 corresponding to the laser peak, if the position of the focus transport set deviates from the RFP of 1350 when performing LAF at the second point, it is adjusted to the RFP. By repeating this method at each point in the remaining area of the ROI, a sharper image can be acquired quickly.

In an embodiment, the slide scan device (100) may determine the center point of the ROI area or the centroid point of the sample to determine the first point for performing the passive autofocus procedure. If a sample exists at the center point of the ROI area or the centroid point of the sample, the slide scan device (100) may determine that point as the first point and perform the passive autofocus procedure at the first point.

For example, the slide scan device (100), e.g., the optical device (240), may identify the centroid of the sample in the ROI, and if it detects that a sample exists at the centroid, it may determine the centroid point as the first point for performing IAF. However, if no sample exists at that point, evaluation of the focal position is impossible, and passive autofocusing, for example, IAF, cannot be performed. Accordingly, if no sample exists at the centroid or the center area of the ROI, or if the detected area where the sample exists is partial, the slide scan device (100), e.g., the optical device (240), may search for the coordinate position where the sample exists closest to the center coordinate of the ROI or the centroid coordinate. For example, the slide scan device (100) may identify the white pixel area in the binarized image as the position where the sample exists. In an embodiment, the slide scan device (100) may convert the coordinate position where the sample exists from image reference coordinates to transport system reference coordinates, and perform a passive autofocus procedure such as IAF at the corresponding coordinates.

That is, in an embodiment, the slide scan device (100), e.g., the optical device (240), identifies the centroid of the sample, determines whether a sample exists at the centroid, determines that point as a first point if a sample exists at the centroid, and determines the point where a sample exists closest to the centroid as a first point if no sample exists at the centroid.

In another embodiment, the slide scan device (100), e.g., the optical device (240), identifies the coordinates of the center point of the ROI, determines whether a sample exists at the center point of the ROI, determines that point as a first point if a sample exists at the center point, and determines the point where a sample exists closest to the center point of the ROI as a first point if no sample exists at the center point.

FIG. 8 illustrates a camera module performing an autofocus procedure according to an embodiment of the present disclosure.

Referring to FIG. 8, the optical device (240) may include a scan camera (810), a barrel (820), a z-axis transport unit (830), an objective lens (840), etc. In an embodiment, the z-axis transport unit (830) may include a motor and can move the objective lens (840) in the z-axis direction using the motor. At this time, the scan camera (810) and the barrel (820) may be fixed without moving in the z-axis direction. In addition, LAF modules (852, 854) may be provided on both sides of the objective lens (840). For example, an LAF laser emitting unit (852) may be provided on the left side of the objective lens (840), so that when the LAF laser emitting unit (852) emits light, the light is reflected from the sample, slide glass, cover glass, etc., and the reflected light can be detected by the LAF light receiving unit (854). Accordingly, peak information such as that in FIG. 7b can be acquired.

In an embodiment, the LAF modules (852, 854) may be moved by the motor together with the objective lens (840). Accordingly, the objective lens (840) and the LAF modules (852, 854) may be referred to as a focus transport set (850). In addition, a control unit (856) for controlling the motor and the focus transport set may be provided next to the objective lens.

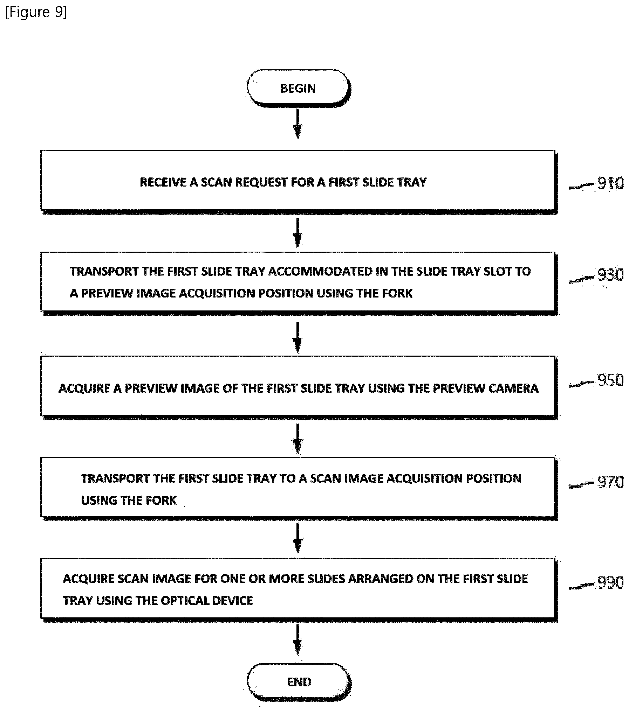

FIG. 9 is a flowchart of a method by which a slide scan device scans a slide according to an embodiment of the present disclosure.

Referring to FIG. 9, in operation 910, the slide scan device may receive a scan request for a first slide tray. In an embodiment, the slide scan device (100) may receive a scan request for the first slide tray based on user input touching the display (120). For example, the user input touching the display (120) may include user input requesting the start of scanning for the first slide tray, user input requesting the acquisition of a preview image for the first slide tray, user input requesting the start of scanning for all slide trays mounted in the slide tray slot, including the first slide tray, etc.

In operation 930, the slide scan device may use the fork to transport the first slide tray, which is accommodated in the slide tray slot, to a position where a preview image can be acquired. In an embodiment, the fork can move along the z-axis by the fork support (270), and the fork support (270) can move along the x-axis. Accordingly, the fork (220) can be moved along the x-axis and z-axis. In an embodiment, after the fork support (270) moves along the x-axis and the fork (220) takes out the first slide tray accommodated in the slide tray slot, the fork (220) may move along the z-axis to transport the first slide tray to the preview image acquisition position.

In operation 950, the slide scan device may acquire a preview image of the first slide tray using the preview camera. In an embodiment, the slide scan device (100) may acquire a preview image for the first slide tray and recognize information about the slide tray, slide, or pathological sample from the preview image. The information recognized from the preview image may include identification information for the first slide tray (e.g., number, barcode, or QR code), direction indication information of the slide tray, identification information for each slide receiving portion, information about the slide, information about the pathological sample, etc. The information about the slide may include whether a slide exists in each slide receiving portion, whether the slide in each slide receiving portion is damaged, whether the slide is accommodated in the correct position in each slide receiving portion, or information about the region of interest where the pathological sample exists within the slide, etc. In addition, the information about the pathological sample may include the specimen site of the pathological sample, the specimen collection time, whether it is stained, the name of the staining reagent, patient information corresponding to the pathological sample, etc.

In an embodiment, the slide scan device (100) may control the display (120) to output the acquired preview image, information acquired from the preview image, etc. on the display (120).

In operation 970, the slide scan device may use the fork to transport the first slide tray to a scan image acquisition position. In an embodiment, the fork (220) may transport the first slide tray such that the first slide tray is placed on the shuttle (250).

In operation 990, the slide scan device may use the optical device to acquire scan images for one or more slides arranged on the first slide tray. In an embodiment, the optical device (240) may be synchronized with the shuttle (250), move the objective lens along the z-axis, and move the shuttle (250) in the xy-plane to acquire scan images for the one or more slides.

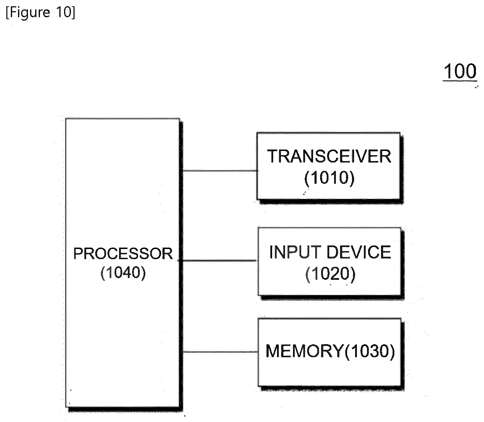

FIG. 10 is a block diagram of a slide scan device according to an embodiment of the present disclosure.

Referring to FIG. 10, the slide scan device (100) may include a transceiver (1010), an input device (1020), a memory (1030), and a processor (1040). However, not all components shown in FIG. 10 are essential components of the slide scan device (100). The slide scan device (100) may be implemented with more components than those shown in FIG. 10, or may be implemented with fewer components than those shown in FIG. 10. Furthermore, the transceiver (1010), input device (1020), memory (1030), and processor (1040) may be implemented in the form of a single chip.

In an embodiment, the transceiver (1010) may communicate with a slide tray slot, a user terminal, or another electronic device connected to the slide scan device (100) via wired or wireless connection.

In an embodiment, the input device (1020) may include a touch display, a preview camera, a scan camera, an image acquisition device, etc.

Various types of data, such as programs (e.g., applications) and files, may be installed and stored in the memory (1030). The processor (1040) may access and use the data stored in the memory (1030), or store new data in the memory (1030). In an embodiment, the memory (1030) may include a database. For example, the memory or database may normally store preview images of slide trays or scan images of ROIs, etc.

The processor (1040) controls the overall operation of the slide scan device (100) and may include at least one processor such as a CPU, GPU, etc. The processor (1040) may control other components included in the slide scan device (100) to perform operations for operating the slide scan device (100). For example, the processor (1040) may execute a program stored in the memory (1030), read a stored file, or store a new file. In an embodiment, the processor (1040), by executing a program stored in the memory (1030), receives a scan request for a first slide tray, identifies the slide tray receiving portion where the first slide tray is accommodated, controls the fork to transport the first slide tray accommodated in the slide tray slot to a preview image acquisition position, controls the preview camera to acquire a preview image of the first slide tray, controls the fork to transport the first slide tray to a scan image acquisition position, and acquires scan images for one or more slides arranged on the first slide tray while moving the shuttle. In an embodiment, the processor (1040), by executing a program stored in the memory (1030), extracts a region of interest (ROI) of a first slide, performs Image Autofocusing (IAF) at a first point of the ROI to determine a Reference Focus Position (RFP) value, and performs Laser Autofocusing (LAF) based on the RFP to scan the ROI of the first slide.

An embodiment of the present disclosure may also be implemented in the form of a recording medium including computer-executable instructions, such as program modules executed by a computer. Computer-readable media can be any available media that can be accessed by a computer and includes both volatile and nonvolatile media, removable and non-removable media. Further, computer-readable media may include both computer storage media and communication media. Computer storage media includes both volatile and nonvolatile, removable and non-removable media implemented in any method or technology for storage of information such as computer-readable instructions, data structures, program modules or other data. Communication media typically embodies computer-readable instructions, data structures, or program modules and includes any information delivery media.

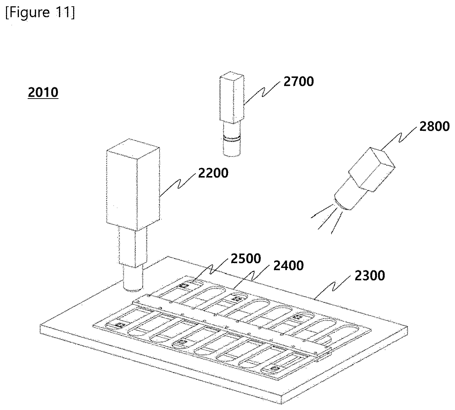

FIG. 11 is an example drawing of a slide scan device according to an embodiment of the present disclosure.

Referring to FIG. 11, the slide scan device (2000) may acquire a preview image for a slide tray, recognize information about the slide tray (2400), slide (2500), or pathological sample from the preview image, acquire a slide scan image based on this, and store the slide scan image in association with the information about the slide tray, slide, or pathological sample.

In an embodiment, the slide scan device (2000) may include a preview camera (2100), a scan camera (2200), and a slide tray stage (2300). For example, while the slide tray (2400) is mounted on the slide tray stage (2300), a preview image for a plurality of slides may be acquired using the preview camera (2100), and an image for the pathological sample accommodated in each slide (2500) may be acquired using the scan camera (2200).

In an embodiment, the slide tray stage (2300) may transport the slide tray (2400) to a position where a preview image can be acquired by the preview camera (2100), and after acquiring the preview image, the slide tray stage (2300) may transport the slide tray (2400) again to a position where an image of the pathological sample can be acquired using the scan camera (2200). In another embodiment, a first slide tray stage (2300) may transport the slide tray (2400) to a position where a preview image can be acquired by the preview camera (2100), and after acquiring the preview image, a second slide tray stage (not shown, separate from the first slide tray stage (2300)) may transport the slide tray (2400) to a position where an image of the pathological sample can be acquired using the scan camera (2200).

In an embodiment, the preview camera (2100) may acquire a preview image for a plurality of slides mounted on the slide tray stage (2300). For example, the preview camera (2100) may acquire the entire image of the slide tray (2400) as a preview image. As another example, the preview camera (2100) may acquire an image of some of the slides mounted on the slide tray (2400) as a preview image.

In an embodiment, the preview camera (2100) may be located spaced apart from the slide tray stage (2300) by a predetermined distance so as to acquire a preview image for the slide tray (2400) including a plurality of slides. The preview camera (2100) may have a resolution suitable for acquiring the information desired to be derived from the preview image. For example, the preview camera (2100) may be configured as a camera with a lower resolution than the scan camera (2200).

In an embodiment, the preview camera (2100) may include one or more lens(es), an image sensor, and a focus control unit. The preview camera (2100) may adjust the focus on the slide tray using the focus control unit, and acquire the image passed through the one or more lens(es) with the image sensor.

In an embodiment, the scan camera (2200) may acquire a scan image for the pathological sample included in each slide (2500). The scan camera (2200) may divide one slide (2500) into a plurality of regions, acquire scan images for each region, and then combine them to acquire an image for the entire slide (2500). For example, the scan camera (2200) may divide the area of the slide (2500) in the form of rectangular tiles and acquire a scan image for each area. As another example, the scan camera (2200) may divide the slide area into a plurality of lines, acquire scan images in a line scan manner, and then combine them. As another example, the scan camera (2200) may acquire an image of the entire slide at once. However, the method by which the scan camera (2200) acquires the image of the slide (2500) is not limited to the above embodiments.

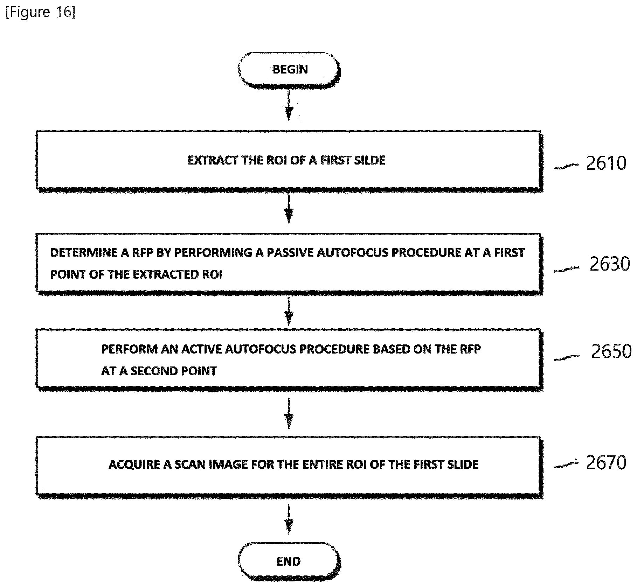

In an embodiment, the scan camera (2200) may include one or more lens(es), an image sensor, and a focus control unit. The scan camera (2200) may use the focus control unit to adjust the focus for each area of the slide to be scanned, and acquire the image passed through the one or more lens(es) with the image sensor. In an embodiment, the scan camera (2200) may perform an autofocus process using both an active autofocus method and a passive autofocus method, and then scan a specific area of the slide. This will be described in more detail later with reference to FIGS. 7a to 7b, and FIG. 16.

In an embodiment, the slide tray stage (2300) may mount the slide tray (2400) on its upper surface. In an embodiment, the slide tray stage (2300) may include fixing means (not shown) capable of fixing the slide tray (2400) to its upper surface. For example, the slide tray stage (2300) may include means for fixing the whole or part of the slide tray (2400) in a vertical direction or a horizontal direction.

In an embodiment, the slide tray stage (2300) may move the slide tray (2400) to a position where the preview camera (2100) or the scan camera (2200) can acquire an image. For example, the slide tray stage (2300) may move the slide tray (2400) to a predetermined position where the preview camera (2100) can acquire the entire image of the slide tray (2400). In addition, the slide tray stage (2300) may move the slide tray (2400) to a predetermined position so that the scan camera (2200) can scan an area of the slide (2500). In addition, after the scan camera (2200) completes scanning of one area, the slide tray (2400) may be moved for scanning the next area.

In another embodiment, a first slide tray stage (2300) may move the slide tray (2400) to a position where the preview camera (2100) or the scan camera (2200) can acquire an image. For example, the first slide tray stage (2300) may move the slide tray (2400) to a predetermined position where the preview camera (2100) can acquire the entire image of the slide tray (2400). Thereafter, a second slide tray stage (not shown, separate from the first slide tray stage (2300)) may move the slide tray (2400) to a predetermined position so that the scan camera (2200) can scan an area of the slide (2500). In addition, the second slide tray stage (not shown) may move the slide tray (2400) for scanning the next area after the scan camera (2200) completes scanning of one area.

In an embodiment, if the scan camera (2200) uses a line scan method, the slide tray stage (2300) may move the slide tray (2400) for line scanning. For example, the slide tray (2400) may be moved in accordance with the line scan speed of the scan camera (2200).

In another embodiment, the slide tray stage (2300) does not move, but the preview camera (2100) or the scan camera (2200) moves to a predetermined position to acquire a preview image or a slide image. For example, the position of the slide tray stage (2300) is fixed, and the preview camera (2100) or the scan camera (2200) may be mounted on a movable arm and moved to a position for acquiring a preview image or a slide scan image.

In an embodiment, the slide scan device (2000) may further include an illumination unit (2600) for providing illumination to the slide tray (2400) and/or the slide (2500). For example, as illustrated in FIG. 11, the illumination unit (2600) may provide illumination from above the slide tray (2400). In another example, the illumination unit (2600) may provide illumination from below the slide tray (2400). In yet another example, the illumination unit (2600) may provide illumination to both the top and bottom surfaces of the slide tray (2400).

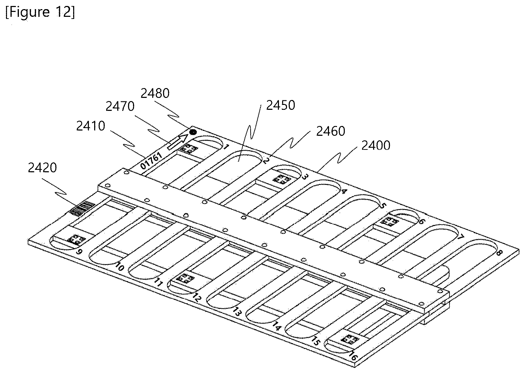

FIG. 12 is a diagram illustrating a slide tray according to an embodiment of the present disclosure.

Referring to FIG. 12, the slide scan device (2000) may recognize information about the slide tray (2400) from the preview image acquired by the preview camera (2100).

In an embodiment, the slide tray (2400) may be composed of a plurality of slide receiving portions (2450), each of which is capable of accommodating a slide, and may include identification information (2410, 2420) for the slide tray (2400), direction indication information (2430, 2440) of the slide tray (2400), and identification information (2460) for each slide receiving portion. For example, the identification information (2410, 2420) for the slide tray (2400) may be printed as letters or numbers, or included in the form of a barcode or QR code. If the identification information (2410, 2420) for the slide tray (2400) is printed as letters or numbers, it can be identified using Optical Character Recognition (OCR) technology from the preview image, and if it is in the form of a barcode or QR code, the identification information for the corresponding slide tray (2400) can be acquired by recognizing it. The slide scan device (2000) can accurately identify the slide tray (2400) currently being scanned by recognizing the identification information (2410, 2420) for the slide tray (2400).

In an embodiment, the slide scan device (2000) may identify whether the slide tray (2400) is located on the slide tray stage (2300) in the preview image. For example, if a marker is placed at a predetermined position on the slide tray stage (2300) where the marker is obscured when the slide tray (2400) is placed on the slide tray stage (2300), the presence or absence of the slide tray (2400) can be simply determined based on whether the mark is recognized in the preview image. Furthermore, if the mark is placed such that the mark on the slide tray stage (2300) is obscured only when the slide tray (2400) is placed correctly, it can also be determined whether the slide tray (2400) is placed in the correct position based on whether the mark is recognized in the preview image. As another example, the slide scan device (2000) may determine the presence or absence of the slide tray (2400) based on whether the identification information (2410, 2420) for the slide tray (2400) or the direction indication information (2430, 2440) of the slide tray (2400) is recognized in the preview image.

In an embodiment, the direction indication information (2430, 2440) of the slide tray (2400) may include indications for the up/down or left/right direction, and may be indicated by arrows for the corresponding direction, or by a predetermined identifier marked on one side of a specific direction. For example, referring to FIG. 12, the direction indication information (2430) of the slide tray (2400) can be indicated by an arrow expressed in the up/down direction of the slide tray (2400). As another example, by marking a predetermined identifier (e.g., a black dot in FIG. 12) at the upper left corner of the slide tray (2400), direction indication information (440) for the up/down and left/right directions can be indicated. The slide scan device (2000) can recognize the direction indication information (2430, 2440) for the slide tray (2400) by recognizing the direction of the arrow in the preview image or by recognizing a specific identifier at a predetermined position. In an embodiment, the slide scan device (2000) can recognize the direction in which the corresponding slide tray (2400) is mounted on the slide tray stage (2300) using the direction indication information (2430, 2440) for the slide tray (2400).

In an embodiment, the identification information (2460) for each slide receiving portion (2450) of the slide tray (2400) may be indicated by numbers, number of dots, length of lines, etc. For example, the identification information (2460) for each slide receiving portion (2450) may be indicated by numbers, and the slide scan device (2000) can recognize the identification information (2460) for each slide receiving portion (2450) using OCR technology from the preview image. As another example, if the identification information (2460) for each slide receiving portion (2450) is expressed by predetermined symbols such as the number of dots or the length of lines, the identification information for each slide receiving portion (2450) can be recognized by recognizing the corresponding symbol from the preview image.

In an embodiment, if a specific slide (2500) accommodated in the slide tray (2400) is damaged or detached from the slide receiving portion (2450), the slide scan device (2000) can recognize the corresponding slide receiving portion (2450) using the identification information (2460) in the preview image. For example, if the 4th slide from the left in the upper slide row is damaged, the slide scan device (2000) can recognize the identification information (2460) of the corresponding slide receiving portion (2450) and recognize that the slide at position 4 is damaged.

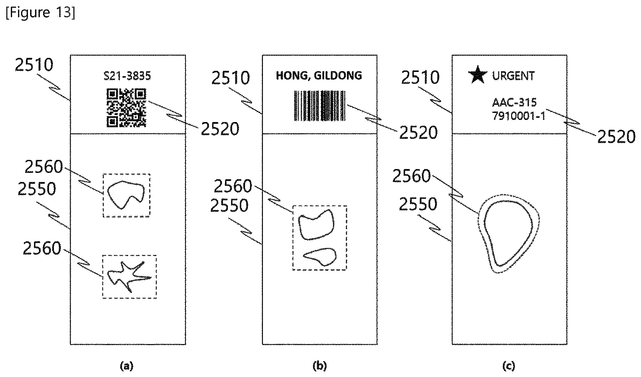

FIG. 13 illustrates a slide according to an embodiment of the present disclosure.

Referring to FIG. 13, the slide scan device (2000) may recognize information about each slide (2500) accommodated in the slide tray (2400) from the preview image acquired by the preview camera (2100). In an embodiment, the slide (2500) may include an information description portion (2510) displaying information about the corresponding slide (2500) and a sample receiving portion (2550) accommodating a pathological sample. The information description portion (2510) of the slide (2500) may present information about the corresponding slide (2500) using letters, numbers, symbols, barcodes, or QR codes. For example, if labeled with letters and/or numbers, the information can be recognized using OCR technology; if expressed by pre-agreed symbols, the information can be recognized using camera vision technology; and if displayed as a QR code or barcode, the information can be recognized by decoding it.

In an embodiment, information about the patient corresponding to the slide (2500), information about the pathological sample, information about the scanning method, etc. may be described in the information description portion (2510). For example, the information about the patient corresponding to the slide (2500) may include the patient's name, patient's age, patient's resident registration number, patient ID (or patient number), department, disease name, etc. The information about the pathological sample may include the specimen site of the sample (e.g., liver tissue), whether it is stained, the name of the staining reagent, the specimen collection time, etc. In addition, the information about the scanning method may include information about the priority of the sample (e.g., whether it is an urgent test), scan resolution, scan area, scan method, etc.

In an embodiment, the slide scan device (2000) may recognize the position of the pathological sample in the corresponding slide (2500) from the preview image and determine in advance the Region of Interest (ROI) to be scanned by the scan camera (2200). For example, the slide scan device (2000) may recognize the position of the pathological sample in the sample receiving portion (2550) of the slide (2500), store it, and then have the scan camera (2200) scan the region of interest to acquire an image of the pathological sample. For example, the region of interest may be set as a rectangle including the pathological sample as illustrated in FIG. 13, or may be set along the outline of the pathological sample, depending on the scanning method.

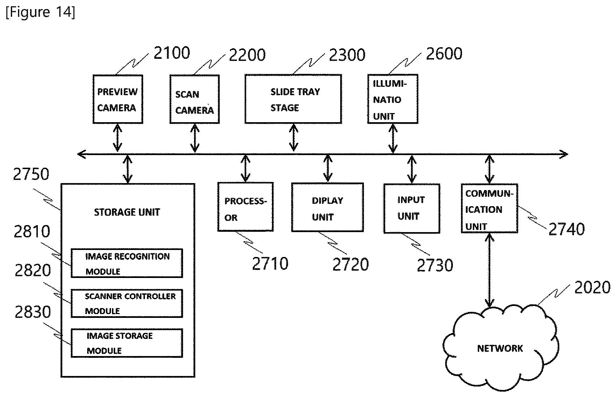

FIG. 14 illustrates a slide scan device according to an embodiment of the present disclosure.

Referring to FIG. 14, the slide scan device (2000) may include a preview camera (2100), a scan camera (2200), a slide tray stage (2300), an illumination unit (2600), a processor (2710), a display unit (2720), an input unit (2730), a communication unit (2740), and a storage unit (2750). However, not all components illustrated in FIG. 14 are essential components of the slide scan device (2000).

In an embodiment, the processor (2710) may be configured as a general-purpose processor or a dedicated processor. The processor (2710) can read program modules stored in the storage unit (2750) and execute them. For example, the processor (2710) may control the preview camera (2100), scan camera (2200), slide tray stage (2300), illumination unit (2600), etc., by executing program modules stored in the storage unit (2750). In addition, the processor (2710) may output the current status of the slide scan device (2000), the progress of slide scanning, and/or the scanned slide image to the display unit (2720), by executing program modules stored in the storage unit (2750). In addition, the processor (2710) may transmit and receive information with an external device via the communication unit (2740) by executing program modules stored in the storage unit (2750). In addition, the processor (2710) may receive user input from the input unit (2730) by executing program modules stored in the storage unit (2750). In an embodiment, the input unit (2730) may be configured in the form of a touch screen on the display unit (2720).

In an embodiment, program modules such as an image recognition module (2810), a scanner control module (2820), and an image storage module (2830) are stored in the storage unit (2750) and can be executed by the processor. For example, the storage unit (2750) may be configured as memory, SSD, HDD, or a combination thereof.

In an embodiment, the image recognition module (2810) may recognize information about the slide tray (2400), slide (2500), and/or pathological sample from the preview image acquired by the preview camera (2100). For example, the image recognition module (2810) may distinguish the slide tray area, slide area, information description portion (2510) of the slide area, and sample receiving portion (2550), extract information about the slide tray (2400) from the slide tray area, extract information about the slide from each slide area, and recognize information about the corresponding pathological sample from the information description portion (2510) and sample receiving portion (2550) of each slide area.

In an embodiment, the image recognition module (2810) may recognize information about the slide tray (2400) from the preview image. Here, the information about the slide tray (2400) may include whether the slide tray (2400) exists on the slide tray stage (2300), identification information for the slide tray (2400), direction information of the slide tray (2400), or identification information (2460) of each slide receiving portion (2450) of the slide tray (2400). For example, whether the slide tray (2400) exists on the slide tray stage (2300) can be determined by whether a marker located on the upper surface of the slide tray stage (2300) (which is obscured when the slide tray (2400) is placed in the correct position) is recognized. For example, the identification information for the slide tray (2400), the direction information of the slide tray (2400), or the identification information (2460) of each slide receiving portion (2450) of the slide tray (2400) can be recognized by letters, numbers, symbols, barcodes, or QR codes displayed on the upper surface of the slide tray (2400).

In an embodiment, the image recognition module (2810) may recognize information about the slide (2500) from the preview image. Here, the information about the slide (2500) may include whether a slide (2500) exists in each slide receiving portion (2450), whether the slide (2500) in each slide receiving portion (2450) is damaged, whether the slide (2500) is accommodated in the correct position in each slide receiving portion (2450), or information about the region of interest where the pathological sample exists within the slide (2500). For example, the presence, damage status, and correct positioning of the slide (2500) in each slide receiving portion (2450) can be obtained through analysis of the preview image, and for the convenience of image analysis, a specific mark may be added to predetermined positions on each slide receiving portion and/or slide. For example, information about the region of interest where the pathological sample exists within the slide (2500) can be set as a region of interest containing the outer contour of the pathological sample, which is recognized in the sample receiving portion (2550) of each slide (2500).

In an embodiment, the image recognition module (2810) may recognize information about the pathological sample from the preview image. Here, the information about the pathological sample may include the specimen site of the pathological sample, the specimen collection time, whether it is stained, the name of the staining reagent, or patient information corresponding to the pathological sample. In addition, the patient information corresponding to the pathological sample may include the patient's name, patient's age, patient's resident registration number, patient number, patient's department, or patient's disease name. In an embodiment, the information about the pathological sample may include information about the priority of the pathological sample, scan resolution, scan area, or scan method. For example, information about the pathological tissue (or pathological sample) can be obtained by recognizing letters, numbers, symbols, barcodes, or QR codes described in the information description portion (2510) of each slide (2500).

In an embodiment, the scanner control module (2820) may control the preview camera (2100) to acquire a preview image, and use the information about the slide tray (2400), slide (2500), and/or pathological sample recognized by the image recognition module (2810) to control the slide scan device (2000) and acquire a scan image of the pathological sample. For example, the scanner control module (2820) may control the scan camera (2200), slide tray stage (2300), and illumination unit (2600) to acquire a scan image using the information about the slide tray (2400), slide (2500), and/or pathological sample.

In an embodiment, the scanner control module (2820) considers the disease name of the patient corresponding to the pathological sample, the name of the body tissue of the pathological sample, whether it is stained, the name of the staining reagent, the specimen collection time, etc., to determine the lens magnification of the scan camera (2200), scan resolution, size of the scan area, scan method, illumination intensity of the illumination unit (2600), illumination method, etc., and control the slide scan device (2000) based thereon. In another embodiment, the scanner control module (2820) may control the slide scan device (2000) based on the information about the scanning method (e.g., priority, scan resolution, scan area, scan method, etc.) recognized by the image recognition module (2810) from the information description portion (2510) of the slide (2500).

In an embodiment, the scanner control module (2820) may provide the preview image along with information about the slide tray (2400), slide (2500), and/or pathological sample to the user, and may receive user input regarding the selection related to slide scanning from the user. In this case, the scanner control module (2820) may control the slide scanning based on the user's selection. For example, the user may select to perform scanning only for some slides accommodated in the slide tray. As another example, the user may select to perform scanning preferentially for a specific slide accommodated in the slide tray. As another example, the user may select a scanning method for a specific slide.

In an embodiment, the image storage module (2830) may store the scan image obtained by the scanner control module (2820) in association with the information about the pathological sample obtained from the image recognition module (2810). For example, the image storage module (2830) may store the corresponding scan image including macro information such as the patient's name, patient's age, patient's resident registration number, patient ID (or patient number), department, disease name, etc., obtained from the image recognition module (2810). For example, the image storage module (2830) may store the corresponding scan image including macro information such as the name of the body tissue of the sample (e.g., liver tissue), whether it is stained, the name of the staining reagent, the specimen collection time, etc., obtained from the image recognition module (2810). For example, the image storage module (2830) may store the corresponding scan image including macro information such as priority (e.g., whether it is an urgent test), scan resolution, scan area, scan method, etc., obtained from the image recognition module (2810).

In an embodiment, the image storage module (2830) may store the corresponding scan image including macro information such as the scan resolution, scan area, scan method, etc., used in the process of obtaining the corresponding scan image from the scanner control module (2820).

In an embodiment, the image storage module (2830) may transmit the scan image obtained by the scanner control module (2820) to an external device using the communication unit (2740), based on the information about the pathological sample obtained from the image recognition module (2810). For example, if the information about the pathological sample indicates that the corresponding pathological sample is the target of an urgent test, the image storage module (2830) may transmit the scan image for the corresponding pathological sample to the external device in association with the information about the pathological sample. As a result, there is an effect that a medical personnel who requested the urgent test can be provided with the image for the corresponding pathological sample preferentially.

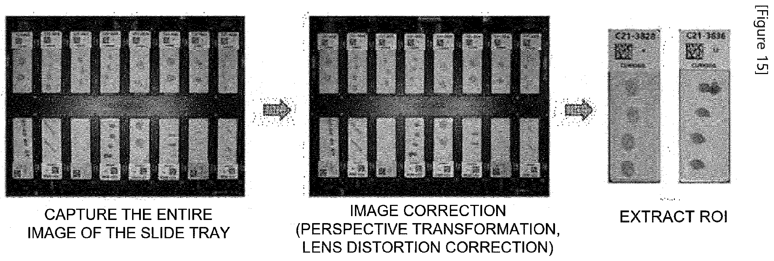

FIG. 15 illustrates a method of extracting a Region of Interest (ROI) according to an embodiment of the present disclosure.

Referring to FIG. 15, the slide scan device (2000) may perform a process of acquiring a preview image to determine an ROI area to be actually scanned among the slides located on the slide tray. In an embodiment, the slide scan device (2000) may capture an entire image of the slide tray using the preview camera (2100).

In an embodiment, the slide scan device (2000) may correct the preview image acquired using the preview camera (2100) through a perspective transformation and lens distortion correction processes according to the camera installation. In addition, the slide scan device (2000) may extract the image for each slide located on the slide tray based on the corrected image. For example, each slide image of the corrected preview image may be cropped.

In an embodiment, the slide scan device (2000) may recognize the background portion and the specimen (or sample) portion in each extracted slide image to extract the outline and the ROI of the specimen (or sample). For example, the slide scan device (2000) may extract the outline and ROI of the specimen (or sample) using the color, brightness difference, etc., between the background portion and the sample portion of each slide image.

In an embodiment, the slide scan device (2000) may convert the image reference coordinates to transport system reference coordinates for the extracted ROI area. The converted transport system reference coordinates may be used by the slide scan device (2000) to perform autofocus and scanning. The method by which the slide scan device (2000) performs autofocus and scanning will be described in more detail later with reference to FIGS. 7a to 7b and FIGS. 16 to 17b.

FIG. 16 is a flowchart illustrating a method of scanning an ROI according to an embodiment of the present disclosure.

Referring to FIG. 16, the slide scan device (2000) may perform steps 610 to 670. However, the fact that the slide scan device (2000) performs steps 610 to 670 also includes the possibility that specific sub-devices, which is included in the slide scan device (2000) but not mentioned in detail herein, perform steps 610 to 670. Although FIG. 16 illustrates that the slide scan device (2000) performs steps 610 to 670, it is of course possible that other devices external to the slide scan device (2000) may perform steps 610 to 670. Furthermore, although embodiments of the present disclosure are described by way of example as being performed by the slide scan device (2000), they may be performed by specific sub-devices included in the slide scan device (2000) or external devices. For example, steps 610 to 670 may be performed by an autofocus performing device included in the slide scan device (2000) or by an autofocus performing device external to the slide scan device (2000).

In step 610, the slide scan device (2000) may extract the ROI of a first slide. In an embodiment, the method of extracting the ROI of the first slide may refer to the previously described explanation with reference to FIG. 15. For example, the slide scan device (2000) acquires an image of the slide tray using the preview camera, performs perspective transformation and lens distortion correction according to the installation of the preview camera on the image of the slide tray, extracts individual images from the corrected image, and extracts the outline and ROI area of the sample using the color difference, brightness difference, etc., between the background portion and the sample portion for the individual images. Accordingly, the ROI of the first slide can also be acquired.

In step 630, the slide scan device (2000) may determine a Reference Focus Position (RFP) by performing a passive autofocus procedure at a first point of the extracted ROI. For example, the passive autofocus procedure may include an Image Autofocusing (IAF) procedure. The IAF procedure is a method of selecting the image with the best focus among several images acquired while adjusting the position of the subject and the lens. Since the IAF method searches for the focal plane based on the actual image data input to the camera, it is possible to search for an optimal focal plane more accurately than a Laser AutoFocusing (LAF), thereby performing a precise autofocusing procedure. However, the IAF method takes a longer time than the LAF. Accordingly, it may be inefficient to perform the IAF autofocus procedure at all points.

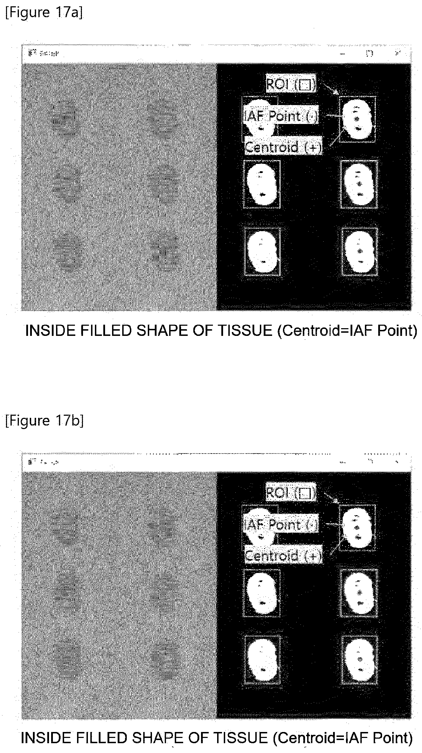

In an embodiment, a first point may be a point where a sample exists within the ROI. For example, the slide scan device (2000) may determine the center point of the ROI or the centroid point of the sample as the first point. If no sample exists at the center point of the ROI or the centroid point of the sample, the slide scan device may determine another point where a sample exists as the first point. This will be described in more detail later with reference to FIG. 17b.

In an embodiment, the slide scan device (2000) may also determine the Reference Focus Position (RFP) corresponding to the searched focal position by searching for the focal position based on the image data actually input to the camera. Here, the reference focus position (RFP) is generally the focal position that serves as a reference when performing LAF, and is the focal position searched by measuring a laser intensity level or a laser peak reflected from a boundary surface using a LAF laser module. The reference focus position (RFP) will be described in more detail later with reference to FIGS. 7a and 7b.

In step 650, the slide scan device (2000) may perform an active autofocus procedure (e.g., LAF) based on the reference focus position (RFP). In an embodiment, the slide scan device (2000) may perform LAF using the reference focus position (RFP) determined at the first point. For example, once the RFP is determined at the first point, the slide scan device (2000) is moved to a second point, and LAF is performed based on the RFP at the second point to acquire an image.

In step 670, the slide scan device (2000) may acquire a scan image of the ROI by repeatedly performing LAF at each point of the entire ROI of the first slide through the repetition of step 650. According to an embodiment, based on the passive autofocus procedure performed at the first point, the slide scan device (2000) can perform more precise focus adjustment process than performing only the active autofocus procedure. Also, it may perform the active autofocus procedure based on the predetermined RFP in areas other than the first point, or in all areas including the first point, thereby enabling a higher speed scanning than performing only a passive autofocus procedure.

FIG. 17a illustrates a method of determining a first point for performing passive autofocus according to an embodiment of the present disclosure.

Referring to FIG. 17a, the slide scan device (2000) may determine the center point of the ROI or the centroid point of the sample to determine a first point for performing the passive autofocus procedure. If a sample exists at the center point of the ROI or the centroid point of the sample, as shown in FIG. 17a, the slide scan device (2000) may determine that point as the first point and perform the passive autofocus procedure at the first point.

As illustrated in the example of FIG. 17a, the slide scan device (2000), e.g., the camera module (2800), identifies the centroid of the sample in the ROI, and if it is identified that a sample exists at the centroid, the centroid point may be determined as a first point at which IAF is to be performed. However, if no sample exists at that point, evaluation of the focal plane is impossible, and thus passive autofocusing, for example, IAF, cannot be performed. Accordingly, a method for determining the first point when no sample exists at the centroid or the center area of the ROI will be described in detail in FIG. 17b.

FIG. 17b illustrates a method of determining a first point for performing passive autofocus according to an embodiment of the present disclosure.

Referring to FIG. 17b, if no sample exists at the centroid of the sample or the center of the ROI, or if the detected area where the sample exists is partial, the coordinate where the actual tissue is located cannot be searched for using simple coordinates such as the center coordinate of the ROI or the centroid coordinate of the sample. Accordingly, the slide scan device (2000), e.g., the camera module (2800), can search for the location coordinate where the sample exists closest to the center coordinate of the ROI or the centroid coordinate. For example, the slide scan device (2000) can identify a white pixel area in a binarized image as the location at which sample exists.

In an embodiment, the slide scan device (2000) can convert the location coordinate at which the sample exists from the image reference coordinates to the transport system reference coordinates, and perform a passive autofocus procedure such as IAF at the corresponding coordinate.

That is, in an embodiment, the slide scan device (2000), e.g., the camera module (2800), identifies the centroid of the sample, determines whether a sample exists at the centroid, determines that centroid as a first point if a sample exists at the centroid, and determines the point where a sample exists closest to the centroid as a first point if no sample exists at the centroid.

In another embodiment, the slide scan device (2000), e.g., the camera module (2800), identifies the coordinate of the center point of the ROI, determines whether a sample exists at the center point of the ROI, determines the center point as a first point if a sample exists at the center point, and determines the point where a sample exists closest to the center point of the ROI as a first point if no sample exists at the center point.

The foregoing description of the present disclosure is for illustrative purposes, and those skilled in the art to which the present disclosure pertains will understand that modifications can be easily made to other specific forms without changing the technical spirit or essential features of the present invention. Therefore, the embodiments described above should be understood as illustrative in all aspects and not restrictive. For example, each component described as a single unit may be implemented in a distributed manner, and similarly, components described as distributed may also be implemented in a combined form.

The scope of the present disclosure is indicated by the claims below rather than the foregoing detailed description, and all changes or modifications derived from the meaning and scope of the claims and their equivalent concepts should be interpreted as being included in the scope of the present disclosure.

## Claims

1. A slide scan device, comprising:
a slide tray slot configured to accommodate one or more slide trays;
a fork configured to transport a slide tray;
a preview camera configured to acquire a preview image for the slide tray; and
an optical device configured to acquire a scan image for one or more slides arranged on the slide tray.

2. The slide scan device of claim 1, wherein the fork is configured to:
extract a slide tray accommodated in the slide tray slot and transport the slide tray to at least one of a preview image acquisition position and a scan image acquisition position.

3. The slide scan device of claim 1, wherein the scan image for the one or more slides is acquired after acquiring the preview image.

4. The slide scan device of claim 1, further comprising:
a shuttle disposed at a position corresponding to the optical device,
wherein the shuttle is configured to move in an xy-plane to acquire the scan image for the one or more slides.

5. The slide scan device of claim 1, wherein the optical device comprises:
a scan camera, a barrel, a z-axis transport unit, and an objective lens,
wherein the objective lens is configured to move along a z-axis according to an autofocus algorithm by the z-axis transport unit.

6. The slide scan device of claim 1, comprising:
a display;
a memory storing one or more instructions; and
at least one processor configured to execute the one or more instructions stored in the memory,
wherein the at least one processor, by executing the one or more instructions, is configured to:
control the display to output an image for at least one of the preview image and the scan image of the one or more slides.

7. The slide scan device of claim 6, wherein the display is provided on a door of the slide scan device.

8. The slide scan device of claim 7, wherein the door is installed to be slidable.

9. A slide scanning method for the slide scan device according to any one of claims 1 to 8, the method comprising the steps of:
receiving a scan request for a first slide tray;
transporting, by the fork, the first slide tray accommodated in the slide tray slot to a preview image acquisition position;
acquiring, by the preview camera, a preview image of the first slide tray;
transporting, by the fork, the first slide tray to a scan image acquisition position; and
acquiring, by the optical device, a scan image for one or more slides arranged on the first slide tray.

10. The method of claim 9, wherein the step of transporting, by the fork, the first slide tray to the scan image acquisition position comprises:
transporting, by the fork, the first slide tray to a shuttle.

11. The method of claim 9, wherein the step of acquiring, by the optical device, the scan image for the one or more slides arranged on the first slide tray comprises:
(a) extracting a region of interest (ROI) of a first slide;
(b) performing Image Autofocusing (IAF) at a first point of the ROI to determine a Reference Focus Position (RFP);
(c) performing Laser Autofocusing (LAF) at a second point of the ROI based on the determined RFP; and
(d) acquiring a scan image for the ROI of the first slide by repeating step (c) for the entire ROI of the first slide.

12. A slide scan device, comprising:
a memory; and
at least one processor configured to execute one or more instructions stored in the memory, wherein the at least one processor is configured to:
(a) extract a region of interest (ROI) of a first slide;
(b) perform Image Autofocusing (IAF) at a first point of the ROI to determine a Reference Focus Position (RFP);
(c) perform Laser Autofocusing (LAF) at a second point of the ROI based on the determined RFP; and
(d) acquire a scan image for the ROI of the first slide by repeating step (c) for the entire ROI of the first slide.

13. A program stored on a computer-readable recording medium for executing the method of any one of claims 9 to 11 on a computer.
